# EUROPÄISCHE PATENTSCHRIFT

(11) **EP 1 820 836 B1**
(45) Veröffentlichungstag und Bekanntmachung des Hinweises auf die Patenterteilung: **13.05.2009**
(21) Anmeldenummer: 07001110.1
(22) Anmeldetag: 19.01.2007
(51) Int. Cl.: C09K 5/10

(54) **Wärmeträger mit verbesserter Temperaturstabilität auf Basis höherer Polyglykole**
Heat carrier with improved temperature stability based on higher polyglycols
Caloporteur avec une stabilité améliorée à température à base de polyglycols supérieurs

(30) Priorität: 03.02.2006 DE 102006004895
(43) Veröffentlichungstag der Anmeldung: 22.08.2007
(73) Patentinhaber: Clariant Finance (BVI) Limited, Road Town, Tortola (VG)
(72) Erfinder: Hafner, Markus, Dr., 85247 Oberroth (DE); Stankowiak, Achim, Dr., 84503 Altötting (DE); Schuster, Johann, 84556 Kastl (DE); Mauerberger, Stefan, 84503 Altötting (DE)
(74) Vertreter: Mikulecky, Klaus

(56) Entgegenhaltungen:
- EP-A1- 0 025 011
- EP-A1- 0 971 013
- DE-A1- 19 525 090

## Beschreibung

Die vorliegende Erfindung betrifft neuartige Wärmeträger auf Basis von höheren Polyglykolen. Die erfindungsgemäßen Wärmeträger weisen gegenüber herkömmlichen Wärmeträgern auf Basis von Monoethylenglykol und/oder 1,2-Propylenglykol eine verbesserte Hochtemperaturstabilität und damit eine höhere Lebensdauer auf.

Das Anwendungsgebiet für die neuartigen Wärmeträger sind technische Anlagen zum Transport von Wärme bzw. Kälte, insbesondere thermische Solaranlagen, die besonderer Temperaturbeanspruchung unterliegen. Dies betrifft für diese spezielle Anwendung sowohl Flach- als auch Vakuumröhrenkollektoren.

Durch die Verwendung effizienter wirkender Kollektorbeschichtungen steigen die Spitzentemperaturen in thermischen Solaranlagen immer weiter an. Dies wird besonders im Stagnationszustand thermischer Solaranlagen zum Problem, weil hier die Umwälzpumpe in vielen Konstruktionen automatisch abschaltet, was eine Überhitzung der Solartlüssigkeit nach sich zieht.

Bei den weit verbreiteten Flachkollektoren entstehen dadurch Temperatur-Spitzenwerte um 200°C, bei den thermisch höher belasteten Vakuumröhrenkollektoren werden sogar bis 300°C gemessen. Während bereits beim Einsatz in Flachkollektoren die Lebensdauern der Wärmeträger auf Basis von Monoethylenglykol und/oder 1,2-Propylenglykol unzureichend sind, treten beim Einsatz solcher Wärmeträger in Vakuumröhrenkollektoren erhebliche Probleme auf, die vor allem auf die thermisch-oxidative Instabilität von Monoethylen- oder Propylenglykol zurückgehen.

Die thermische Zersetzung von Monoethylenglykol und 1,2-Propylenglykol lässt als Abbauprodukte unter anderem aggressive Säuren (z. B. Ameisen-, Milch- und Essigsäure) und schwer charakterisierbare Spaltprodukte entstehen. Eine Beschreibung hierzu findet sich im Arbeitsblatt der Arbeitsgemeinschaft Korrosion e.V., Korrosionsuntersuchungen in Wärmeträgern für Solaranlagen, Werkstoffe und Korrosion, 39, 297-304 (1988).

Die entstehenden Abbauprodukte wirken sich im Kollektorkreis negativ aus. Durch weitere Hitzeeinwirkung im Stagnationszustand brennen sich die Rückstände in die Absorberfläche ein. Die Rückstände können im Extremfall sogar zur vollständigen Verstopfung der Kollektorleitungen und damit zum Zirkulationsstillstand führen.

Dieses Problem wurde bereits in DE-A-195 25 090 beschrieben. Durch Zugabe eines höhermolekularen Polyalkylenglykols im Massenbereich von 195-400 in einer Konzentration von 10-40 % zu 1,2-Propylenglykol sollte die Auskristallisation von gelösten Korrosionsinhibitoren verhindert werden. Dieses Konzentrat wurde entsprechend mit Wasser abgemischt, um die Wärmeübertragung zu optimieren.

EP-A-0 971 013 offenbart eine Wärmeträgertlüssigkeit, enthaltend ein Gemisch aus Korrosionsinhibitoren, Triethylenglykol und 1,2-Propylenglykol. Der Anteil an Triethylenglykol liegt hier zwischen 45 und 98, der von Propylenglykol zwischen 1 und 55 %. Der Vorteil dieses Wärmeträgers ist, dass die niedrigmolekularen Glykole die Lösungseigenschaften der Additive und damit ihr Kristallisationsverhalten bei hohen Temperaturen verbessert.

Jedoch hatte sich gezeigt, dass es bei Wärmeübertragungsmedien des Standes der Technik noch immer zur thermisch-oxidativen Zersetzung von Ethylenglykol und 1,2-Propylenglykol kommt.

Aufgabe der vorliegenden Erfindung war es deshalb, die thermische Stabilität der Wärmeträgerflüssigkeiten so zu verbessern, dass es auch im Stagnationszustand von Solaranlagen nicht zur Zersetzung des Wärmeträgers kommt.

Überraschenderweise wurde nun gefunden, dass Wärmeübertragungsmedien auf Basis höherer Polyglykole thermisch signifikant stabiler als die auf reiner 1,2-Propylenglykolbasis oder Gemischen aus Triethylenglykol und 1,2-Propylenglykol beruhenden Wärmeübertragungsmedien sind.

Gegenstand der Erfindung sind somit Wärmeträgerkonzentrate für Solaranlagen, enthaltend
a) 92 bis 99 Gew.-% mindestens eines Polyglykols der Formel R-O-(CH₂-CH₂-O)ₙ-H, worin n eine ganze Zahl von 3 bis 500 ist, und R für H, eine C₁- bis C₄-Alkylgruppe oder einen aromatischen Rest mit 6 bis 12 Kohlenstoffatomen steht,
b) 1 bis 8 Gew.-% mindestens eines Korrosionsinhibitors,
mit der Maßgabe, dass ihr Gehalt an Ethylenglykol und 1,2-Propylenglykol unter 0,2 Gew.-% liegt.

Ein weiterer Gegenstand der Erfindung ist ein Verfahren zum Betrieb einer Solaranlage, wobei das oben beschriebene Wärmeträgerkonzentrat in wässriger Verdünnung als Wärmeträger verwendet wird.

Ein weiterer Gegenstand der Erfindung ist die Verwendung des oben beschriebenen Wärmeträgerkonzentrats in wässriger Verdünnung als Wärmeträger in Solaranlagen

n steht vorzugsweise für eine ganze Zahl von 3 bis 20.

R steht vorzugsweise für H, Methyl oder einen gegebenenfalls substituierten Phenylrest.

Der Anteil des Glykols am Wärmeträgerkonzentrat liegt vorzugsweise zwischen 93 und 98 Gew.-%, insbesondere zwischen 94 und 96 Gew.-%.

In einer weiteren bevorzugten Ausführungsform der Erfindung ist das Polyglykol eine Mischung aus Triethylenglykol und Tetraethylenglykol im Mischungsverhältnis zwischen 3:1 und 1:3.

Der Gehalt des erfindungsgemäßen Wärmeträgerkonzentrats an Ethylenglykol und 1,2-Propylenglykol liegt vorzugsweise unter 0,1 Gew.-%, insbesondere unter 0,05 Gew.-%.

Der erfindungsgemäße gebrauchsfertige Wärmeträger entsteht durch Mischen des erfindungsgemäßen Wärmeträgerkonzentrates mit Wasser. Das bevorzugte Mischungsverhältnis liegt zwischen 30 und 70 Gew.-%, besonders bevorzugt zwischen 45 und 55 Gew.-% Wasser und 70 bis 30, besonders bevorzugt 55 und 45 Gew.-% des erfindungsgemäßen Wärmeträgerkonzentrates.

Als Korrosionsinhibitoren können im Wärmeträgerkonzentrat und im gebrauchsfertigen Wärmeträger beispielsweise Borate, Silikate, Amine, Triazole oder Thiazole, Molybdate, Säureamide, Nitrate, Natriumbenzoat oder Salze von Mono-, Di- und Tricarbonsäuren sowie andere, Literaturbekannte Korrosionsinhibitoren, im Konzentrat vorzugsweise in Mengen von 2 bis 7 Gew.-% zum Einsatz kommen. Die bevorzugte Konzentration der Korrosionsinhibitoren beträgt zwischen 1 und 4 Gew.-%, bezogen auf den gebrauchsfertigen Wärmeträger.

Weiterhin ist die Zugabe eines Oxidationsstabilisators möglich.

### Beispiele

**Tabelle 1: Thermo-oxidativer Abbau verschiedener Glykole bestimmt über DTA (Differential-Thermo-Analyse; 50 ml Luft, Probeneinwaage ca. 20 ± 5 mg, Aufheizrate 2°C/Min.)**

| Zeitdauer bis zum Abbau des Glykols um... | 1,2-Propylenglykol | Monoethylenglykol | Triethylenglykol | Polyglykol VP 1962* |
|---|---|---|---|---|
| ... 10 % der Einwaage | 7 Min. | 8 Min. | 14 Min. | 59 Min. |
| ... 50 % der Einwaage | 11 Min. | 12 Min. | 19 Min. | --- (> Versuchsdauer) |

| | | | | |
|---|---|---|---|---|
| * = Addukt von 14 EO-Einheiten an Resorcin | | | | |

Die Bestimmung der Thermostabilität durch DTA (Tabelle 1) zeigt eindeutig, dass der thermo-oxidative Abbau von 1,2-Propylenglykol schneller voranschreitet als bei Triethylenglykol. Besonders thermostabil zeigt sich bei dieser Untersuchung das Polyglykol VP 1962.

Zur Bestimmung ihrer thermischen Stabilität wurden die folgenden Wärmeträger hergestellt.

**Tabelle 2: Wärmeträgerzusammensetzungen**

| | Beispiel 1 (Vergleich) | Beispiel 2 (Vergleich) | Beispiel 3 (Vergleich) | Beispiel 4 | Beispiel 5 |
|---|---|---|---|---|---|
| VE-Wasser | 48,6 | 48,6 | 48,6 | 48,6 | 48,6 |
| 1,2-Propylenglykol | 50,0 | 25,0 | 3,0 | --- | --- |
| Triethylenglykol, hochsiedend | --- | 25,0 | 47,0 | 50,0 | --- |
| Resorcin + 14 EO | --- | --- | --- | --- | 50,0 |
| Natrium-2-ethylhexanoat | 1,0 | 1,0 | 1,0 | 1,0 | 1,0 |
| DIPA | 0,10 | 0,10 | 0,10 | 0,10 | 0,10 |
| Benzotriazol | 0,05 | 0,05 | 0,05 | 0,05 | 0,05 |
| Natriumbenzoat | 0,25 | 0,25 | 0,25 | 0,25 | 0,25 |
| Summe: | 100,0 % | 100,0 % | 100,0% | 100,0 % | 100,0% |

Zur Simulierung der Bedingungen in einer Solaranlage wurde ein Schnelltest entwickelt (Thermo-Test).

In einen doppelwandigen Edelstahl-Vorratsbehälter (dient gleichzeitig als Kühler) werden 300 ml Prüfflüssigkeit eingefüllt. Eine Pumpe fördert das Medium in einem geschlossenem Kreislauf mit einer Durchflussmenge von 260 I/h über eine Prüfscheibe aus Kupfer, welche elektrisch mit ca. 950 Watt von unten beheizt wird. Zwischen Pumpe und Heizung ist ein über PLS-System gesteuertes Ventil eingebaut, welches bei 160°C den Durchfluss unterbricht. Dadurch wird die Prüfflüssigkeit verdampft. Bei 330°C öffnet sich das Ventil, Flüssigkeit wird wieder über die Prüfscheibe gefördert und diese dadurch abgekühlt. Bei Erreichen der Schließtemperatur von 160°C beginnt ein neuer Zyklus. Der Prüfdruck beträgt maximal 6 bar über. Die Testzeit beträgt 72 Stunden. Zur Sicherheit ist die Prüfapparatur über eine Durchflusssicherung und Temperaturbegrenzung mittels PLS-System und einem Sicherheitsventil mit 10 bar Einstelldruck abgesichert.

In diesem Schnelltest zeigt sich, dass ein auf höheren Polyglykolen basierender Wärmeträger signifikant stabiler ist als ein Wärmeträger auf Basis von Propylenglykol. Beim Wärmeträger gemäß Beispiel 3 entstehen in Summe weitaus weniger entsprechende Säuren als bei den Vergleichsbeispielen 1 und 2. Ebenso nimmt die Reservealkalität im Medium während des Versuchs weniger schnell ab.

Die chemischen Zusammensetzungen der Wärmeträgerflüssigkeiten sind in Tabelle 2 wiedergegeben. Beispiel 3 entspricht dabei der Formulierung einer erfindungsgemäßen Zusammensetzung.

**Tabelle 3: Ergebnisse des Thermo-Tests**

| | Abnahme der Reserveaikalität [%] | Menge an entstandenen Säuren nach Versuch [%] | | |
|---|---|---|---|---|
| | | Ameisensäure | Milchsäure | Essigsäure |
| Beispiel 1 | 34 | 0,071 | 0,008 | 0,490 |
| Beispiel 2 | 25 | 0,009 | 0,069 | 0,047 |
| Beispiel 3 | 45 | 0,003 | 0,016 | 0,015 |
| Beispiel 4 | 21 | 0,001 | 0,001 | 0,001 |
| Beispiel 5 | 19 | 0,001 | 0,001 | 0,001 |

Aus den aufgeführten Versuchsbeispielen geht eindeutig hervor, dass Wärmeträger ausschließlich auf Basis höherer Polyglykole thermo-oxidativ stabiler sind als Wärmeträger auf Basis von reinem Propylenglykol oder auf Basis von Triethylenglykol-Propylenglykol-Gemischen.

## Patentansprüche

1. Wärmeträgerkonzentrate für Solaranlagen, enthaltend
a) 92 bis 99 Gew.-% mindestens eines Polyglykols der Formel R-O-(CH₂-CH₂-O)ₙ-H, worin n eine ganze Zahl von 3 bis 500 ist, und R für H, eine C₁- bis C₄-Alkylgruppe oder einen aromatischen Rest mit 6 bis 12 Kohlenstoffatomen steht,
b) 1 bis 8 Gew.-% mindestens eines Korrosionsinhibitors,
mit der Maßgabe, dass ihr Gehalt an Ethylenglykol und 1,2-Propytenglykol unter 0,2 Gew.-% liegt.

2. Wärmeträgerkonzentrat nach Anspruch 1, worin der Korrosionsinhibitor ausgewählt ist aus Boraten, Silikaten, Aminen, Triazolen oder Thiazolen, Molybdaten, Nitraten, Natriumbenzoat oder Salzen von Mono-, Di- und Tricarbonsäuren.

3. Wärmeträgerkonzentrat nach Anspruch 1 und/oder 2, **gekennzeichnet durch** einen Gehalt an Korrosionsinhibitoren von 2 bis 7 Gew.-%.

4. Wärmeträgerkonzentrat nach einem oder mehrerer der Ansprüche 1 bis 2, **gekennzeichnet durch** einen Gehalt an Polyglykol von 94 bis 98 Gew.-%.

5. Wärmeträgerkonzentrat nach einem oder mehrerer der Ansprüche 1 bis 3, **gekennzeichnet durch** einen Gehalt an Polyglykol von 93 bis 98 Gew.-%.

6. Wärmeträgerkonzentrat nach einem oder mehrerer der Ansprüche 1 bis 5, worin n für eine ganze Zahl von 3 bis 20 steht.

7. Wärmeträgerkonzentrat nach einem oder mehrerer der Ansprüche 1 bis 6, worin R für H oder Methyl steht.

8. Wärmeträgerkonzentrat nach einem oder mehrerer der Ansprüche 1 bis 7, worin das Polyglykol eine Mischung aus Triethylenglykol und Tetraethylenglykol im Mischungsverhältnis zwischen 3:1 und 1:3 ist.

9. Wärmeträgerkonzentrat nach einem oder mehrerer der Ansprüche 1 bis 8, worin der Gehalt an Ethylenglykol und 1,2-Propylenglykol unter 0,1 Gew.-% liegt.

10. Wärmeträger für Solaranlagen, enthaltend 30 bis 70 Gew.-% des Wärmeträgerkonzentrats nach einem oder mehreren der Ansprüche 1 bis 9 und Wasser ad 100 Gew.-%.

## Claims

1. A heat-transfer concentrate for solar installations, containing
a) from 92 to 99% by weight of at least one polyglycol of the formula R-O-(CH₂-CH₂-O)ₙ-H, in which n is an integer of from 3 to 500 and R is H, a C₁- to C₄-alkyl group or an aromatic radical having 6 to 12 carbon atoms,
b) from 1 to 8% by weight of at least one corrosion inhibitor,
with the proviso that its content of ethylene glycol and 1,2-propylene glycol is less than 0.2% by weight.

2. The heat-transfer concentrate as claimed in claim 1, wherein the corrosion inhibitor is selected from borates, silicates, amines, triazoles or thiazoles, molybdates, nitrates, sodium benzoate or salts of mono-, di- and tricarboxylic acids.

3. The heat-transfer concentrate as claimed in claim 1 and/or 2, comprising a content of from 2 to 7% by weight of corrosion inhibitors.

4. The heat-transfer concentrate as claimed in one or more of claims 1 to 2, comprising a polyglycol content of from 94 to 98% by weight.

5. The heat-transfer concentrate as claimed in one or more of claims 1 to 3 comprising a polyglycol content of from 93 to 98% by weight.

6. The heat-transfer concentrate as claimed in one or more of claims 1 to 5, wherein n is an integer of from 3 to 20.

7. The heat-transfer concentrate as claimed in one or more of claims 1 to 6, wherein R is H or methyl.

8. The heat-transfer concentrate as claimed in one or more of claims 1 to 7, wherein the polyglycol is a mixture of triethylene glycol and tetraethylene glycol in the mixing ratio of from 3:1 to 1:3.

9. The heat-transfer concentrate as claimed in one or more of claims 1 to 8, wherein the content of ethylene glycol and 1,2-propylene glycol is less than 0.1 % by weight.

10. A heat-transfer medium for solar installations, containing from 30 to 70% by weight of the heat-transfer concentrate as claimed in one or more of claims 1 to 9 and water to 100% by weight.

## Revendications

1. Concentrats de caloporteur pour installations solaires, contenant
a) 92 à 99% en poids d'au moins un polyglycol de formule R-O-(CH₂-CH₂-O)ₙ-H, où n représente un nombre entier de 3 à 500, et R représente H, un groupe C₁-C₄-alkyle ou un radical aromatique comprenant 6 à 12 atomes de carbone,
b) 1 à 8% en poids d'au moins un inhibiteur de corrosion,
à condition que leur teneur en éthylèneglycol et en 1,2-propylèneglycol soit inférieure à 0,2% en poids.

2. Concentrat caloporteur selon la revendication 1, dans lequel l'inhibiteur de corrosion est choisi parmi les borates, les silicates, les amines, les triazoles ou les thiazoles, les molybdates, les nitrates, le benzoate de sodium ou les sels d'acides monocarboxyliques, dicarboxyliques et tricarboxyliques.

3. Concentrat de caloporteur selon la revendication 1 et/ou 2, **caractérisé par** une teneur en inhibiteurs de corrosion de 2 à 7% en poids.

4. Concentrat de caloporteur selon l'une ou plusieurs des revendications 1 à 2, **caractérisé par** une teneur en polyglycol de préférence de 94 à 98% en poids.

5. Concentrat de caloporteur selon l'une ou plusieurs des revendications 1 à 3, **caractérisé par** une teneur en polyglycol de 93 à 98% en poids.

6. Concentrat de caloporteur selon l'une ou plusieurs des revendications 1 à 5, dans lequel n représente un nombre entier de 3 à 20.

7. Concentrat de caloporteur selon l'une ou plusieurs des revendications 1 à 6, dans lequel R représente H ou méthyle.

8. Concentrat caloporteur selon l'une ou plusieurs des revendications 1 à 7, dans lequel le polyglycol est un mélange de triéthylèneglycol et de tétraéthylèneglycol dans un rapport de mélange entre 3:1 et 1:3.

9. Concentrat caloporteur selon l'une ou plusieurs des revendications 1 à 8, dans lequel la teneur en éthylèneglycol et en 1,2-propylèneglycol est inférieure à 0,1 % en poids.

10. Caloporteur pour installations solaires, contenant 30 à 70% en poids du concentrat caloporteur selon l'une ou plusieurs des revendications 1 à 9 et de l'eau jusqu'à 100% en poids.
